Europäisches Patentamt

European Patent Office

Office européen des brevets

(19)

(11) Numéro de publication: **0 209 404**
**B1**

(12) **FASCICULE DE BREVET EUROPEEN**

(45) Date de publication du fascicule du brevet: **07.11.90**

(51) Int. Cl.⁵: **H 02 H 6/00**

(21) Numéro de dépôt: **86401003.8**

(22) Date de dépôt: **12.05.86**

(54) **Dispositif de mesure de température pour dispositif de protection thermique.**

(30) Priorité: **13.05.85 FR 8507344**

(43) Date de publication de la demande:
**21.01.87 Bulletin 87/04**

(45) Mention de la délivrance du brevet:
**07.11.90 Bulletin 90/45**

(84) Etats contractants désignés:
**BE DE GB IT SE**

(56) Documents cités:
**DE-A-2 528 767**
**US-A-4 117 527**
**US-A-4 330 809**

(73) Titulaire: **SEXTANT Avionique**
**5/7 rue Jeanne Braconnier Parc Tertiaire**
**F-92368 Meudon la Forêt Cedex (FR)**

(72) Inventeur: **Fachinetti, François**
**25, rue Jules Védrines**
**F-26027 Valence Cédex Drôme (FR)**
Inventeur: **Neveu, Claude**
**25, rue Jules Vérdrines**
**F-26027 Valence Cédex Drôme (FR)**

(74) Mandataire: **Bloch, Robert et al**
**2, square de l'Avenue du Bois**
**F-75116 Paris (FR)**

# EP 0 209 404 B1

**Description**

La présente invention concerne un dispositif permettant de simuler avec une grande précision et pour une large gamme d'applications, l'état thermique d'un objet qui est le siège d'une dissipation d'énergie.

Ce dispositif est particulièrement intéressant dans tous les cas où la mesure directe de la température de l'objet n'est pas possible du fait de ses caractéristiques physiques ou de la rapidité d'évolution de cette température.

Ce dispositif de mesure de température d'un point donné d'un objet trouve notamment des applications intéressantes à la protection thermique des dispositifs à semi-conducteurs tels que les relais statiques ou les contrôleurs électroniques de puissance (CEP) qui peuvent présenter des fortes dissipations en régime stable ou transitoire.

On sait en effet que les mesures de température sont difficiles à effectuer notamment dans les cas où:

la sonde de température perturbe l'état thermique de l'objet à mesurer,

l'objet à mesurer est physiquement inaccessible,

la distance entre le point à mesurer et le thermomètre introduit des erreurs et des retards, ceci étant particulièrement vrai pour les mesures de températures de jonctions de semi-conducteurs où il est impossible d'implanter un thermomètre au niveau de la jonction elle-même,

les moyens à mettre en oeuvre sont inadaptés à beaucoup d'applications.

Une première amélioration de ces mesures de températures est obtenue grâce à l'utilisation simultanée:

d'une sonde de température classique située à distance donnée du point dont on veut mesurer la température,

d'un modèle représentatif des différences de température entre la sonde de température et le point dont la température est à mesurer,

d'informations sur les puissances dissipées dans le dispositif à protéger, informations obtenues le plus souvent facilement par des mesures électriques de courant et/ou de tension.

Le principe d'un tel dispositif de simulation de l'état thermique d'un objet a déjà été exposé par les inventeurs dans une communication sur un modèle de transmission thermique présentée lors du 4ème Séminaire ESTEC (Space-Craft Power Conditioning Seminar) qui s'est tenu en Septembre 1982 à Noordwijk (Pays-Bas).

On connaît déjà, par le document US—A—4 117 527, un dispositif de mesure de température d'un objet, ou d'un point, dissipatif à protéger, comprenant un réseau analogique, représentatif d'un modèle de la transmission thermique entre l'objet à protéger et le point de mesure de température et qui comprend une pluralité de circuits résistance-condensateur (Rn+1, Cn) en série et pourvu d'une alimentation électrique, et un thermomètre.

Cependant, ce document concerne le contrôle thermique de semiconducteurs. Or un calculateur analogique, pour la mise en oeuvre du modèle de transmission thermique, est incapable de simulation pendant un temps relativement long. Si pour des semiconducteurs, il ne s'agit pas d'un trop gros inconvénient, il n'en est pas de même pour d'autres applications.

On connaît aussi, par le document DE—A—2 528 767, un dispositif de protection d'équipements électrotechniques et plus précisément d'enroulements en cuivre de moteurs et de transformateurs. Cependant, ce dispositif qui ne contient pas de thermomètre, ne peut rétablir les conditions initiales que par rapport à la température ambiante dont l'analogue électrique est la tension nulle; les variations de la température ambiante n'y sont pas prises en compte. En outre, le calculateur analogique de ce dispositif est alimenté directement à partir de la source de puissance, de sorte qu'en cas de coupure de la puissance, l'information sur l'échauffement de cuivre est perdue.

La présente invention vise à proposer un dispositif du type enseigné par le document US—A—4 117 527 qui soit utilisable avec de très bonnes performances dans toutes les conditions possibles d'emploi.

A cet effect, la présente invention concerne donc un dispositif de ce type, caractérisé par le fait qu'il comporte un dispositif d'initialisation du réseau, qui comprend un amplificateur opérationnel (A), dont la sortie est reliée aux condensateurs (Cn) des circuits en série du réseau par une pluralité d'interrupteurs ($D_n$), et dont les deux entrées sont respectivement reliées aux bornes de la résistance ($R_1$) du premier des circuits en série du réseau, le dispositif d'initalisation permettant, lors de la mise, ou de la remise, sous tension, de fixer le réseau dans l'état du point de fonctionnement représentatif de la température réelle de l'objet à protéger, l'initialisation s'effectuant en préchargeant dans un temps très court la pluralité de condensateurs ($C_1$, $C_2$...$C_4$) à un potentiel ($V_M$) représentatif de la température mesurée, et des moyens pour retarder la coupure de l'alimentation électrique du réseau et du dispositif d'initialisation après la disparition du phénomème dissipatif de l'objet à protéger, pour que la température réelle de l'objet redevienne égale à la température mesurée.

Dans une forme de réalisation préférée du dispositif de l'invention, l'objet à protéger est un moyen de commutation d'un contrôleur électronique de puissance agencé pour contrôler l'alimentation d'une charge ($R_L$) par une source ($V_E$) en fonction d'une commmande extérieure (C).

Les éléments constitutifs de l'invention seront mieux compris à l'aide de la description qui suit et en référence aux figures annexées suivantes:

2

la figure 1 représente le schéma de principe du calculateur analogique utilisé dans l'invention et comprenant le modèle thermique réalisé à l'aide du réseau 14, alimenté par la tension VM proportionnelle à la température $\theta_M$ mesurée et le courant i proportionnel à la puissance instantannée P dissipée dans l'objet à protéger.

Ce réseau fournit la tension VS proportionnelle à la température instantanée $\theta_S$ de l'objet à protéger.

La figure 2 est un premier exemple de réalisation d'un dispositif selon l'invention destiné à garantir que la température $\theta_S$ calculée dans le réseau analogique 14 de la figure 1 est à tout instant représentative de la température réelle de l'objet à protéger.

Ce dispositif d'initialisation du réseau analogique 14 est représenté par la référence 15 dans cet exemple.

La figure 3 est un second exemple de réalisation du dispositif selon l'invention qui assure l'initialisation de l'état du réseau analogique 14 de la figure 1, par utilisation d'un interrupteur commandé I.

la figure 4 est l'illustration d'un contrôleur électronique de puissance, d'un type classique correspondant à l'art antérieur, qui assure sa protection par limitation du courant maximum, et sa disjonction par simple temporisation.

la figure 5 est l'illustration d'un contrôleur électronique de puissance, protégé par le dispositif, objet de l'invention, comportant un ou plusieurs commutateurs de puissance 10 du type MOS canal N.

les figures 6 et 7 illustrent deux exemples de réalisation d'un autre objet de l'invention qui est le procédé de mesure de la puissance instantanée dissipée dans le circuit à protéger.

la figure 8 illustre un exemple d'utilisation d'un ou plusieurs commutateurs de puissance du type MOS Canal P.

Suivant les principes précédemment exposés, le simulateur de l'état thermique d'un objet utilise les analogies existant entre les lois qui régissent les flux thermiques et électriques.

Les équations fondamentales de la thermique et de l'électricité:

$$d\,Q_T = Pdt = mCd\theta; \quad R_T = \frac{d\theta}{dt} \qquad , \qquad d\,Qe = idt = CedV; \quad Re = \frac{dV}{dt}$$

mettent en évidence l'analogie entre les grandeurs suivantes:

| | | | | |
|---|---|---|---|---|
| Energie thermique | $Q_T$ | $\longleftrightarrow$ | Charge électrique | Qe |
| Puissance thermique | P | $\longleftrightarrow$ | Courant | i |
| Capacité calorifique | mC | $\longleftrightarrow$ | Capacité | Ce |
| Résistance thermique | $R_T$ | $\longleftrightarrow$ | Résistance | Re |
| Température | $\theta$ | $\longleftrightarrow$ | Tension | V |
| Temps | t | $\longleftrightarrow$ | Temps | t |

Cette analogie peut être utilisée afin de connaître la température $\theta_S$ d'un objet ou d'un point d'un objet dissipatif ne se prêtant pas à la mesure directe (évolution trop rapide, inaccessibilité physique, etc). Nous avons montré que la température $\theta_S$ est parfaitement déterminée par la connaissance:

de la puissance instantanée P dissipée au niveau de la zone de dissipation ZD de l'objet;

de la température $\theta_M$ en un point PP du chemin thermique d'évacuation de l'énergie dissipée en ZD, accessible à la mesure directe;

des caractéristiques thermiques (résistances thermiques et capacités calorifiques) de la liaison thermique existant entre ZD et PP;

de l'état thermique initial.

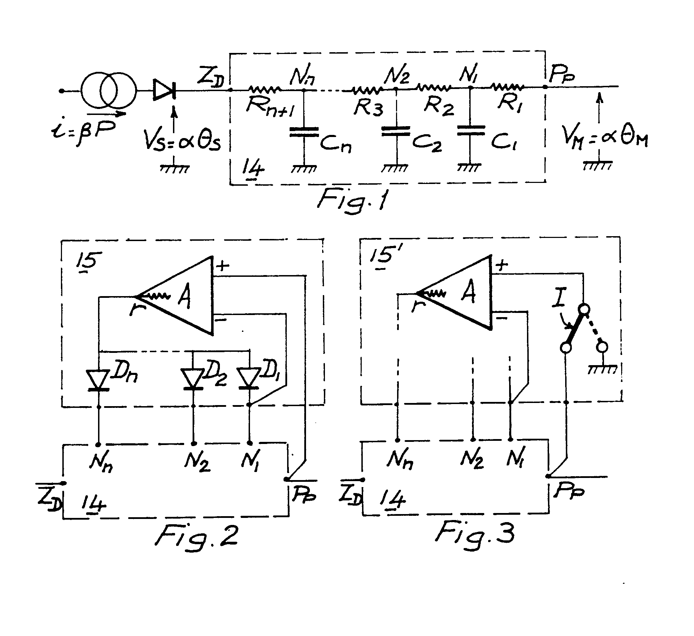

Du fait des analogies entre phénomènes thermiques et électriques on peut simuler électriquement $\theta_S$ à l'aide d'un calculateur analogique (figure 1) dans lequel:

le réseau RC est l'analogue électrique des résistances thermiques et capacités calorifiques de la liaison thermique existant entre ZD et PP;

la diode D simule le fait que l'énergie dissipée en ZD ne peut s'évacuer que par la chaîne thermique;

VM est une tension, appliquée au réseau, proportionnelle (coefficient de proportionnalité $\alpha$) à la température $\theta_M$ mesurée en PP;

i est un courant proportionnel (coefficient de proportionnalité $\beta$) à la puissance instantanée P dissipée en ZD,

la tension VS est le résultat recherché et correspond à la mesure électrique de la température $\theta_S$ recherchée, au coefficient $\alpha$ près.

Une des difficultés essentielles pour utiliser un tel dispositif de calcul analogique est de l'initialiser, c'est-à-dire fixer l'état électrique du calculateur analogique de telle sorte que, à sa mise sous tension il soit effectivement représentatif de l'état thermique du dispositif à protéger.

Dans bon nombre d'applications, ce problème d'initialisation n'est pas pris en considération parce qu'il n'est pas critique; mais il peut, dans certain cas, être à l'origine d'erreurs importantes sur la température simulée, et cela pendant des durées significatives.

En effet, lors de la mise sous tension du calculateur analogique, les tensions $VN_I$ aux bornes des

3

capacités sont nulles, alors que VM ne l'est pas forcément. Ces tensions vont évoluer vers VM, avec des constantes de temps, dépendant du réseau RC, qui peuvent être importantes. De ce fait, l'information VS de la température n'est correcte qu'après un délai correspondant à plusieurs fois la plus grande des constantes de temps.

Pour un certain nombre d'applications, ce délai est prohibitif.

Le dispositif, objet de l'invention, en évitant ces inconvénients, permet non seulement d'obtenir une excellente précision de mesure dès la mise sous tension du calculateur analogique, mais encore d'être conservatif dans tous les cas, c'est-à-dire que, dans l'éventualité d'une erreur au moment de l'initialisation du calculateur analogique, la température $\theta_S$ n'est jamais sous-estimée; ceci assure la sécurité.

Ces performances sont obtenues par deux moyens complémentaires consistant en un circuit électronique d'initialisation qui fixe en un temps très court les tensions $VN_i$ des noeuds $N_i$ à la tension VM lors de la mise sous tension, et un séquencement adéquat de la coupure de l'alimentation électrique des circuits de calculateur analogique.

Un premier schéma de principe illustrant une réalisation du dispositif d'initialisation du calculateur analogique est présenté en figure 2.

Dans ce schéma, le dispositif d'initialisation est réalisé par un amplificateur opérationnel A, d'impédance de sortie r, dont le signal de commande est la tension aux bornes de la résistane $R_1$ et dont la sortie alimente les capacités $C_1$ à $C_n$ à travers les diodes $D_1$ à $D_n$.

Lors de la mise sous tension, le fonctionnement en est le suivant: la tension VM s'établit très rapidement avec la constante de temps de l'électronique du thermomètre à sortie en tension, cette constante de temps étant des centaines, voire des milliers de fois plus courte que celle du réseau RC. Si, à un moment ou à un autre, la tension VM est supérieure à la tension $VN_1$ même très légèrement, compte tenu du gain important de l'amplificateur opérationnel, la tension en sortie de ce dernier augmente de telle manière que les diodes $D_1$ à $D_n$ se mettent à conduire et les capacités $C_1$ à $C_n$ se chargent avec une constante de temps $rC_i$ qui peut être choisie aussi faible que nécessaire en fonction des caractéristiques de sortie de l'amplificateur opérationnel d'impédance de sortie r.

Tant qu'aucun courant n'arrive en ZD, les tensions $VN_1$ à $VN_n$ suivent la tension VM avec:

la constante de temps du réseau $RC_i$ (i=1 à n) si VM décroit,

la constante de temps rCi si VM augmente.

Lorsqu'un courant arrive en ZD les tensions des noeuds $VN_1$ à $VN_n$ augmentent et deviennent supérieures à VM. La tension en sortie de l'amplificateur opérationnel décroît, les diodes $D_1$ à $D_n$ sont polarisées en inverse et le réseau analogique est alors isolé du système d'initialisation.

Cette isolation se fait ainsi automatiquement par les diodes $D_1$ à $D_n$, jouant ici le rôle d'interrupteurs automatiques.

Un autre mode de réalisation du dispositif précédent consiste à utiliser à la place des diodes $D_1$ à $D_n$ des interrupteurs commandés permettant au dispositif d'avoir un fonctionnement symétrique vis-à-vis des températures de mesure, qu'elles soient croissantes ou décroissantes.

On peut aussi faire en sorte de commander l'isolation effective par les diodes $D_1$ à $D_n$ en utilisant l'interrupteur I tel que représenté en figure 3, qui représente la partie modifiée par rapport à la figure 2 du dispositif d'initialisation.

Cet interrupteur I met l'entrée+de l'amplificateur opérationnel A à une tension telle que les diodes $D_1$ à $D_n$ soient polarisées en inverse, c'est-à-dire en état ouvert non conducteur, dès la fin de l'initialisation proprement dite, dont la durée minimale est égale à trois fois la plus grande des constantes de temps rCi, i=1 à n.

Le dispositif, en sus des moyens d'initialisation précédemment décrits comporte des moyens permettant d'introduire un retard à la coupure de l'alimentation des circuits du calculatuer analogique et d'initialisation.

Ceci permet de préserver la précision de la mesure dynamique de la température de l'objet à protéger même en cas de coupure transitoire, de durée indéterminée, particulièrement pour les cas de coupures brèves.

Le dispositif comporte donc un séquencement permettant de ne couper l'alimentation du calculateur analogique qu'avec un délai supérieur à environ 3 fois la constante de temps T du réseau RC par rapport à la fin de la phase de dissipation de l'objet à protéger.

De cette manière, le calculateur analogique associé à son dispositif d'initialisation garantit toujours une excellente précision indépendamment du fait que, au début de la phase de dissipation, il soit alimenté ou non, sachant que pendant toute la durée de cette phase il doit évidemment être toujours alimenté.

En effet, si deux phases de dissipation consécutives se produisent et que le début de la deuxième à lieu moins de 3 T après la fin de la première, le calculateur a toujours été alimenté et il a conservé la mémoire intégrale des deux phases de dissipation et de leurs effets.

Dans le cas contraire, si le début de la deuxième phase de dissipation a lieu après un délai supérieur à 3T, après la fin de la phase précédente, le calculateur à perdu son alimentation pendant un certain temps, donc a perdu sa mémoire, mais la réinitialisation au début de la deuxième phase, consistant à mettre toutes les tensions $VN_1$ à $VN_n$ à la valeur de la tension VM, simule très précisément la réalité.

Une des applications, plus particulièrement intéressante, des dispositifs de mesure de température d'un objet est la mesure de la température de fonctionnement de semi-conducteurs et, entre autres, son

4

application à la protection thermique des relais statiques et contrôleurs électroniques de puissance (CEP).

Un CEP est un moyen électronique permettant de commander l'application à une charge d'un courant le plus souvent continu issu d'une source d'alimentation, en assurant une protection efficace des éléments en présence: alimentation, réseau électrique de distribution, commutateur, charge. La protection des alimentations, réseaux électriques et charges est réalisée par la limitation à une valeur maximale prédéterminée (qui peut être fonction du temps) du courant qui traverse ladite charge.

Pour cela on utilise un commutateur à l'état solide réalisé par un ou plusieurs composants semi-conducteurs de puissance, par exemple du type MOSFET ou bipolaire.

La protection du commutateur lui-même, est assurée par un système de disjonction.

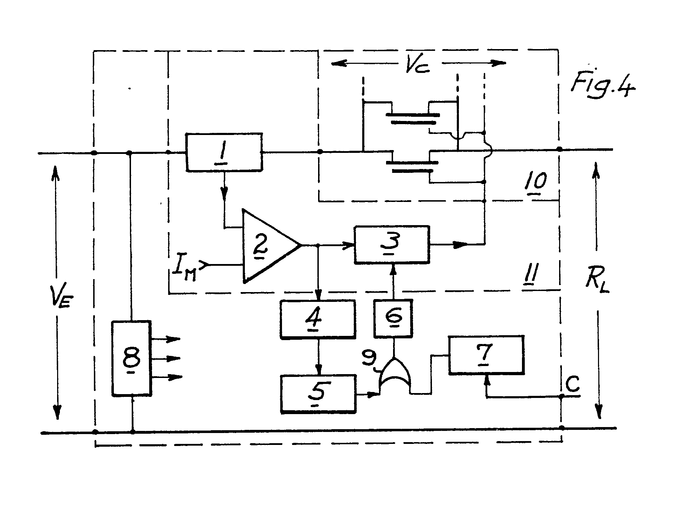

Le principe de fonctionnement d'un CEP classique est présenté en figure 4;

Le CEP est intercalé entre la source d'alimentation $V_E$ et la charge $R_L$. Son rôle premier est d'établir ou d'interrompre l'alimentation de la charge $R_L$ par l'alimentation $V_E$ en fonction de la commande extérieure C.

Sa seconde fonction est la limitation du courant maximum $I_M$ absorbé par la charge.

Cette dernière fonction nécessite une certaine protection du commutateur 10, protection assurée par les fonctions de temporisation avant disjonction automatique.

L'interrupteur proprement dit est le commutateur 10. L'interrupteur protégé en courant 11 est constitué typiquement de l'interrupteur proprement dit 10 associé à un senseur de courant 1, un amplificateur d'erreur 2 comparant le courant actuel à la valeur maximale fixée $I_M$ et du buffer 3.

Le détecteur 4 met en évidence un état éventuel de passage en limitation de l'interrupteur 10, et la détection déclenche une temporisation assurée par 5. Après un certain temps, le temporisateur 5 engendre un signal qui commande prioritairement le buffer 3 à travers la mémoire 6 de l'état de l'interrupteur par l'intermédiaire de la porte 9.

La commande extérieure C s'applique également à la porte 9 par l'intermédiaire de l'interface de commande 7.

Les circuits internes du contrôleur de puissance sont alimentés par le circuit d'alimentation interne 8 à partir de l'alimentation $V_E$.

Lorsque le CEP reçoit une commande qui le met dans l'état passant (commutateur 10 saturé), le courant à travers le commutateur est $I=V_E/R_L$ où $V_E$ est la tension de l'alimentation présente en entrée du CEP et $R_L$ la charge en sortie du CEP.

Si pour une raison quelconque, $R_L$ deivent inférieure à $V_M/I_M$, où $I_M$ est le courant maximal toléré à un instant donné, alors le commutateur se met à fonctionner en mode linéaire et le courant le traversant est asservi sur la valeur $I_M$ grâce à l'action des éléments 1, 2 et 3. La puissance P dissipée dans l'interrupteur, qui était très faible en mode saturé, puisque égale au produit de l'intensité normale I absorbée par la charge et de la tension de saturation du commutateur, soit souvent moins de 1% de la puissance maximale transmissible qui vaut $I_M \times V_E$, devient:

$$P=I_M(V_E-I_M \times R_L)=I_M \times V_C.$$

Cette puissance est d'autant plus importante que $R_L$ est faible. Elle est égale à la puissance maximale transmissible $I_M \times V_E$ sur un court-circuit ($R_L=O$).

Par ailleurs, dès que l'intensité I égale $I_M$, cet état est détecté par l'élément 4 qui déclenche un système de temporisation 5. Si I ne revient pas en desous de $I_M$ pendant la durée de la temporisation, le commutateur est ouvert automatiquement via les éléments 9 et 6 et le CEP disjoncte. Sinon le système de temporisation 5 se réinitialise.

La durée maximale admissable de la temporisation dépend:

des tensions présentes à l'entrée et à la sortie du CEP,

de la valeur de la température ambiante au moment de la surcharge,

du mode de refroidissement du dispositif,

des suites d'éventuelles surcharges passées.

Dans le CEP classique, la durée de la temporisation est fixée de manière à couvrir les pires cas et sa détermination n'intègre jamais tous les paramètres dont dépend la durée maximale admissible. Il en résulte les inconvénients suivants:

difficultés pour optimiser la capacité du CEP en fonction d'une utilisation déterminée,

existence de contraintes opérationnelles; autrement dit le CEP n'est protégé que dans des conditions opérationnelles spécifiées qui peuvent changer en fonction de l'application,

la standardisation de ce type de fonction est difficile à atteindre car elle induit de fortes contraintes au niveau des caractéristiques physiques du CEP, telles que poids, encombrement et coûts.

Le moyen radical de résoudre ces problèmes est d'accéder à la connaissance des températures des zones critiques du CEP.

En effet, le seul paramètre qui peut limiter la vie d'une fonction électronique, dans une gamme de tensions et de températures d'utilisation, est la température maximale atteinte par les composants dissipatifs.

Il est clair que dans le cas du CEP, ce sont les zones actives (jonction pour les composants bipolaires, canal pour les MOS) du ou des semi-conducteurs qui forment le commutateur, qui s'échauffent le plus.

Or la mesure directe de température de ces zones actives est impossible à réaliser de manière simple

5

compte tenu de leur faible volume et donc de leur très faible constante de temps thermique (quelconques microsecondes pour les zones actives proprement dites).

D'ou l'avantage qu'apporte pour la protection de tels contrôleurs électroniques de puissance, l'utilisation d'un calculateur analogique rapide, constitué conformément à la description précédente.

Dans ce cas, la mesure par simulation de l'évolution des températures des zones de dissipation (ZD) du commutateur du CEP permet d'assurer la sécurité thermique, la valeur de la température calculée étant alors le critère unique et optimal de disjonction automatique. L'association possible en parallèle de sous-ensembles interrupteurs limités en courant (sections) et l'utilisation de ce critère apportent à un CEP ainsi conçu les avantages fondamentaux et uniques suivants, par rapport aux réalisations antérieures:

modularité maximale, une large gamme de capacité en courant pouvant être réalisée à partir d'un nombre restreint de sous-ensembles standards (seul le nombre ou le type de section est à adapter à l'application),

souplesse d'utilisation maximale puisque les seules contraintes sont de respecter les gammes de tension et de température d'utilisation des composants de puissance,

très grande fiabilité d'utilisation,

excellentes performances électriques en termes de pertes en ligne, rendement, rapidité dues à la nouvelle possibilité d'utiliser en parallèle des sections comportant des MOSFET de puissance comme interrupteurs,

possibilité d'intégration technologique monolithique ou hybride compte tenu des échauffements acceptables dus à la rapidité de réaction du contrôle thermique,

rapidité du contrôle de courant qui élimine la nécessité d'utilisation de composants encombrants destiné à la limitation de la vitesse d'évolution du courant de charge,

standardisation des sous-ensembles constitutifs.

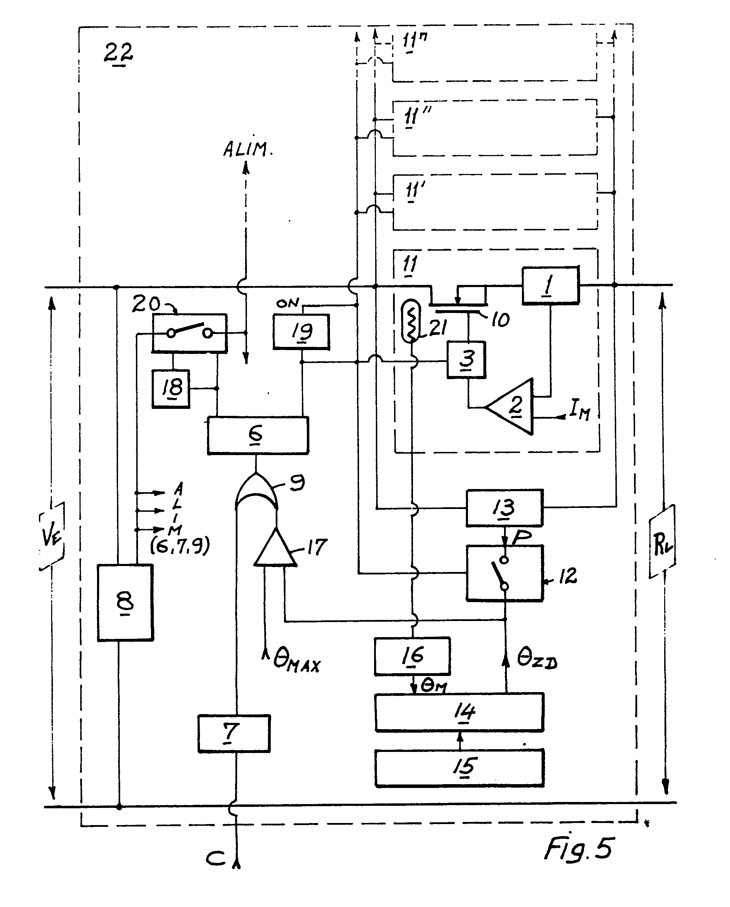

Un CEP suivant l'invention est représenté à titre d'exemple en figure 5.

De manière analogue au CEP classique de la figure 4, le CEP, objet de l'invention, est intercalé entre une alimentation $V_E$ et une charge $R_L$. Il a pour rôle d'établir ou d'interrompre l'alimentation de la charge $R_L$ par l'alimentation $V_E$ en fonction de la commande externe C. Le CEP comprend:

la fonction interrupteur limité en courant 11 proprement dite réalisée par une ou plusieurs sections en parallèle, chaque section étant l'association d'un transistor à effet de champ FET unique 10, d'un senseur de courant 1, d'un amplificateur d'erreur 2 et d'un buffer 3;

la fonction commande qui est assurée par la réception de la commande externe C proprement dite par l'interface 7, par l'aiguillage 9 de cette commande vers un dispositif de mémorisation 6 de ladite commande.

Ce dispositif 6 commande l'état conducteur des sections 11 avec un retard déterminé par la temporisation 19 et l'état bloqué des sections 11, sans retard,

la fonction protection est assurée par le calculateur analogique 14, mis dans un état représentatif de l'état thermique du ou des interrupteurs 10 par le dispositif d'initialisation 15, les paramètres d'entrée du calculateur analogique étant acquis par, d'une part le dispositif de mesure 13 de la puissance instantanée dissipée dans le ou les interrupteurs 10, d'autre part par le thermomètre constitué de la sonde de température 21 et du circuit de conversion 16.

L'information puissance instantanée dissipée est aiguillée par l'interrupteur 12, en entrée du calculateur analogique suivant la séquence qui sera décrite ci-après.

L'information de température issue du calculateur analogique 14, est comparée par le comparateur 17 à la température θ max de consigne.

Lorsque cette valeur de consigne est atteinte, une commande, prioritaire d'ouverture des interrupteurs 10 est enovyée par 17 via la porte 9 vers la mémoire d'état 6.

Les circuits électroniques réalisant ces fonctions sont alimentés par l'alimentation interne 8; la mémoire d'état 6, l'interface 7 et la porte 9 sont alimentés en permanence; le reste des circuits réalisant ces fonctions est alimenté à travers l'interrupteur 20 commandé par la mémoire d'état 6, cet interrupteur 20 se fermant sans retard lorsque la mémoire d'état 6 commande la mise en conduction de 10 et avec une temporisation définie par 18 lorsque la mémoire d'état commande l'ouverture du ou des interrupteurs 10.

Une autre des caractéristiques essentielles de l'invention réside dans la méthode de mesure de la puissance instantanée dissipée dans l'élément à protéger ZD.

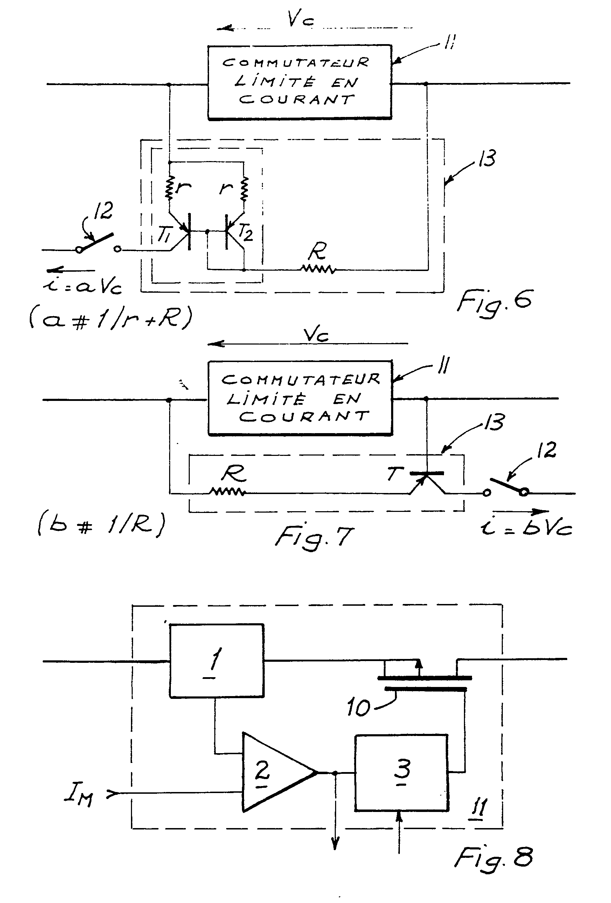

La valeur de cette puissance, du fait de la limitation en courant du ou des commutateurs 10 est obtenue par la seule mesure de la chute de tension $V_C$ aux bornes des sections du commutateur. Cette mesure de puissance dissipée dans l'élément à protéger est réalisée par un circuit de transformation tension-courant dont les figures 6 et 7 présentent des exemples de réalisation.

Le courant issu du transformateur tension-courant 13 proportionnel à la puissance instantanée dissipée dans le ou les interrupteurs est injecté dans le calculateur analogique 14. Par contre, la sortie de ce transformateur tension-courant n'est représentatif de la puissance dissipée en ZD seulement lorsque le commutateur 10 du CEP est fermé. En effet, s'il est ouvert, la tension aux bornes du commutateur 10 est maximale, mais le courant le traversant étant nul, la puissance qui y est dissipée est également nulle.

De ce fait, le senseur de puissance est un transformateur tension-courant 13 associé à l'interrupteur électronique 12, synchrone de la commande du commutateur du CEP.

Les circuits des figures 6 et 7 présentent des exemples des senseurs de puissance.

Selon l'invention, le senseur de puissance 13 de la figure 6 fonctionne de la manière suivante:

La tension $V_C$ qui est la chute de tension aux bornes du commutateur limité en courant 11, se développe aux bornes des deux résistances R et r en série, à la tension du seuil de la diode base-émetteur du transistor $T_2$ près. Cette tension de seuil est généralement négligée devant la valeur de $V_C$. Le courant i traversant r, situé dans l'émetteur de $T_2$ est sensiblement égal à $V_C/R+r$.

Le dispositif 22 constitué de $T_1$, $T_2$ et des deux résistances R est un "miroir de courant"; il en résulte que le courant issu du collecteur de $T_1$ est donc égal au courant i proportionnel à $V_C$, donc proportionnel à la puissance instantanée dissipée dans le commutateur traversé par le courant de limitation $I_M$.

Le senseur de puissance 13 de la figure 7 utilise l'égalité des courants collecteur et émetteur du transistor T, ayant un gain en courant suffisant. Le courant d'émetteur est sensiblement égal au rapport $V_C/R$ (à la tension de seuil de la diode base-émetteur près).

Une autre caractéristique essentielle de l'invention réside dans la méthode de mise en parallèle de plusieurs commutateurs 11 limités en courant, dans le but d'augmenter la capacité de commutation du CEP.

Les interrupteurs 10 du CEP ainsi constitué, doivent se partager équitablement le courant total traversant ce CEP.

Pour des commutateurs réalisés à l'aide de transistors bipolaires des résistances de faible valeur, en série dans les émetteurs, peuvent suffire pour réaliser le partage équilibré du courant total traversant le CEP.

Par contre, pour des commutateurs réalisés à partir de plusieurs MOSFET de puissance, le problème n'est pas aussi simple. Le moyen le plus sûr de réaliser une répartition équitable des puissances dissipées est de mettre en parallèle non pas les composants de puissance seuls, comme pratiqué dans l'état de l'art antérieur, mais d'associer à chacun d'eux ses propres circuits de contrôle de courant maximal.

Le courant de limitation pouvant ainsi être réglé de manière précise pour chaque section 11, les puissances dissipées dans chaque composant de puissance 10 constitutif de commutateur du CEP sont parfaitement maitrisées et identiques. Cette répartition équitable de la puissance dissipée dans chacune des sections 11 conduit à une troisième caractéristique essentielle de l'invention qui réside dans l'utilisation d'un dispositif de protection thermique unique pour l'ensemble des commutateurs 10 utilisés.

Dans ce but, l'invention prévoit de s'assurer que les chemins thermiques d'évacuation de l'énergie dissipée dans chaque interrupteur 10 sont similaires.

Dans le cas où des chemins thermiques identiques ne seraient pas réalisables il est prévu d'assurer la protection thermique du composant ayant la plus mauvaise résistance thermique d'évacuation de l'énergie qu'il absorbe.

La figure 5 déjà décrite représente un dispositif conforme à l'invention; le fonctionnement en est le suivant:

Le commutateur du CEP est réalisé par la mise en parallèle de plusieurs sections 11, sections identiques constituées chacune d'un commutateur 10 de type FET, d'un senseur de courant 1, d'un amplificateur d'erreur 2 et d'un buffer 3.

La sonde de mesure 21, de la température $\theta_M$ est placée sur le chemin thermique d'évacuation de l'énergie dissipée par le CEP, ou par celui de ces commutateurs 10, ayant la plus mauvaise résistance thermique.

Chaque section 11 reçoit le signal de commande issu de la mémoire d'état 6, qui intervient au niveau des éléments 1, 2 ou 3 de la boucle de limitation de courant pour commander la conduction ou le blocage du FET 10.

En mode conducteur, le courant à travers le FET 10 peut être compris entre 0 et $I_M$. Si ce courant est inférieur à $I_M$ le FET est saturé, si ce courant est égal à $I_M$, le FET fonctionne en mode linéaire pour assurer la régulation du courant qui le traverse à la valeur maximale $I_M$.

Comme déjà indiqué, la protection en température est assurée par les éléments 21, 16, 13, 12, 14, 15, 17 qui permettent de simuler la température réelle de la zone ZD à partir de:

a) la mesure de la température en un point PP du chemin thermique d'évacuation de l'énergie dissipée en ZD (sonde de température 21 située en PP et thermomètre à sortie en tension 16 associés au FET de la section No 1 par exemple),

b) la mesure de la puissance instantanée dissipée en ZD obtenue par 12 et 13,

c) la simulation des caractéristiques du chemin thermique entre ZD et PP par le réseau RC analogique 14.

Tant que $\theta_{ZD}$ est inférieure à la température limite $\theta$ max, l'état du CEP correspond à l'état de la commande externe C transmis par 6.

Si $\theta_{ZD}$ atteint le seuil $\theta$ max fixé, la sortie du comparateur 17 bascule, ce qui correspond à l'émission d'une commande interne d'ouverture des commutateurs 10 prioritaire sur la commande externe C du fait de 9.

Par ailleurs, cette protection thermique est assurée de façon complémentaire par la conception spécifique des circuits d'alimentation interne décrits ci-après:

Le circuit 8 fournit les tensions d'alimentation internes au CEP:

Ce circuit 8 alimente en permanence les fonctions 6, 7 et 9 afin d'assurer la transmission permanente des ordres de commande du CEP.

Les circuits internes bas niveau des sections 11 et de l'ensemble des circuits assurant le contrôle thermique proprement dit 21, 16, 13, 12, 15 et 17 ne sont pas alimentés lorsque le commutateur du CEP est ouvert afin de minimiser la consommation dans cet état (rôle de l'interrupteur 20).

Chaque fois que l'ouverture du commutateur est provoquée, que ce soit de manière interne (action de la protection thermique) ou sur demande de la comande externe C, les FET sont bloqués immédiatement et les alimentations internes non permanentes des circuits listés ci-dessus sont coupées par l'interrupteur 20 avec un certain retard fixé par la temporisation 18, ceci pour maintenir la précision du calculateur analogique, comme précédemment décrit.

En mode de fonctionnement nominal, c'est-à-dire hors cas de disjonction thermique, l'état des commutateurs 10 reproduit l'état de la commande d'entrée C qui est traitée par les éléments 7, 9 et 6. L'élément 7 assure l'adaptation et le filtrage éventuel de la commande externe d'entrée C. Cette commande après adaptation permet de positionner l'état de la mémoire 6 à travers le circuit 9 qui assure la priorité du contrôle thermique venant de 17 sur la commande externe C.

L'état mémorisé en 6 est transmis sans retard vers les sections 11 lorsque la commande C ou la commande de disjonction thermique demandent l'ouverture de l'interrupteur; et avec un retard déterminé par la temporisation 19, lorsque par l'intermédiaire de la commande C on souhaite la fermeture des commutateurs 10.

L'objet de cette temporisation 19 est de permettre aux alimentations internes commutées par 20 de s'établir avant fermeture effective du commutateur 10.

Le CEP présenté en figure 5 utilise des MOS FET canal N. Il est possible d'utiliser des MOS FET canal P, et, dans ce cas, les sections 11 sont réalisées comme indiqué en figure 8.

Le fonctionnement est identique à celui des sections utilisant des canaux N.

**Revendications**

1. Dispositif de mesure de température d'un objet, ou d'un point, dissipatif à protéger, comprenant un réseau analogique (14), représentatif d'un modèle de la transmission thermique entre l'objet à protéger et le point de mesure de température et qui comprend une pluralité de circuits résistance-condensateur (Rn+1, Cn) en série et pouvru d'une alimentation électrique, et un thermomètre, caractérisé par le fait qu'il comporte un dispositif (15) d'initialisation du réseau (14), qui comprend un amplificateur opérationnel (A), dont la sortie est reliée aux condensateurs (Cn) des circuits en série du réseau (14) par une pluralité d'interrupteurs (Dn), et dont les deux entrées sont respectivement reliées aux bornes de la résistance (R1) du premier des circuits en série du réseau (14), le dispositif d'initialisation permettant, lors de la mise, ou de la remise, sous tension, de fixer le réseau (14) dans l'état du point de fonctionnement représentatif de la température réelle de l'objet à protéger, l'initialisation s'effectuant en préchargeant dans un temps très court la pluralité de condensateurs (C1, C2...C4) à un potentiel (VM) représentatif de la température mesurée, et des moyens pour retarder la coupure de l'alimentation électrique du réseau (14) et du dispositif d'initialisation (15) après la disparition du phénomène dissipatif de l'objet à protéger, pour que la température réelle de l'objet redevienne égale à la température mesurée.

2. Dispositif de mesure et de protection selon la revendication 1, dans lequel les interrupteurs sont des diodes (Dn).

3. Dispositif de mesure et de protection selon la revendication 2, dans lequel l'entrée positive de l'amplificateur opérationnel (A) est reliée à la borne associée de la résistance (R1) du premier des circuits en série de réseau (14) par l'intermédiaire d'un interrupteur (I) agencé pour polariser les diodes (Dn) en inverse à la fin de l'initialisation.

4. Dispositif de mesure et de protection selon la revendication 1, dans lequel les interrupteurs sont des interrupteurs commandés.

5. Dispositif de mesure et de protection selon l'une des revendications 1 à 4, dans lequel l'objet à protéger est un moyen de commutation (11), d'un contrôleur électronique de puissance (22) agencé pour contrôler l'alimentation d'une charge (RL) par une source (VE) en fonction d'une commande extérieure (C).

6. Dispositif de mesure et de protection selon la revendication 5, dans lequel le moyen de commutation (11) est limité en courant et comporte un transistor à effet de champ (10), un senseur de courant (1) et un amplificateur d'erreur (2), un thermomètre (21) étant placé sur le chemin d'évacuation de l'énergie thermique dissipée par le moyen de commutation (11).

7. Dispositif de mesure et de protection selon la revendication 6, dans lequel un organe (13) de mesure de la puissance instantanée dissipée dans le moyen de commutation (11) est branché aux bornes de celui-ci et relié au réseau analogique (14) par l'intermédiaire d'un interrupteur (12), le thermomètre (21) étant relié au réseau (14) par un circuit de conversion (16).

8. Dispositif de mesure et de protection selon l'une des revendications 5 à 7, dans lequel le réseau analogique (14) est relié à une entrée d'un comparateur (17) qui reçoit sur une autre entrée une température de consigne et qui est relié par sa sortie, à une porte OU (9) recevant aussi le signal de commande extérieure (C), la sortie de la porte (9) étant reliée à une mémoire (6) commandant l'état du moyen de commutation (11).

9. Dispositif de mesure et de protection selon la revendication 8, dans lequel une source interne (8) alimente en permanence la mémoire (6) et la porte (9), tous les autres éléments du dispositif étant alimentés par la source (8) par l'intermédiaire d'un interrupteur (20) commandé par la mémoire (6).

10. Dispositif de mesure et de protection selon la revendication 9, dans lequel la commande de l'interrupteur (20) par la mémoire (6) s'effectue par l'intermédiaire d'un temporisateur (18) lorsque la mémoire (6) commande l'ouverture du moyen de commutation (11).

11. Dispositif de mesure et de protection selon l'une des revendications 5 à 10, dans lequel le moyen de commutation comporte une pluralité de commutateurs (11, 11'...11$^n$) limités en courant, branchés en parallèle.

12. Dispositif de mesure et de protection selon la revendication 11, dans lequel les chemins d'évacuation de l'énergie thermique dissipée des commutateurs (11, 11'...11$^n$) sont similaires.

13. Dispositif de mesure et de protection selon la revendication 11, dans lequel un thermomètre (21) est placé sur le chemin d'évacuation de l'énergie thermique dissipée de celui des commutateurs possédant la plus mauvaise résistance thermique.

## Patentansprüche

1. Einrichtung zur Messung der Temperatur eines zu schützenden, wärmedissipatierenden Objektes bzw. Punktes, mit einem das Modell der Wärmeübertragung zwischen dem zu schützenden Objekt und dem Temperaturmeßpunkt darstellenden Analognetz (14) und das mehrere in Serie geschaltete und mit einer elektrischen Anspeisung versehene Widerstands-Kondensatorkreise (Rn+1, Cn) umfaßt, sowie mit einem Thermometer, dadurch gekennzeichnet, daß sie eine Einrichtung (15) zur Initialisierung des Netzes (14) umfaßt, welche einen Operationsverstärker (A) aufweist, dessen Ausgang über mehrere Schalter ($D_n$) mit dem Kondensatoren der in Serie geschalteten Kreise des Netzes (14) und dessen beiden Eingänge jeweils mit den Anschlüssen des Widerstands ($R_1$) des ersten der in Serie geschalteten Kreise des Netzes (14) verbunden sind, wobei die Initialisierungseinrichtung, unter Spannung, zum Zeitpunkt der Einschaltung oder der Wiedereinschaltung, eine Festlegung des Netzes (14) auf den Arbeitspunkt erlaubt, welcher der Isttemperatur des zu schützenden Objektes entspricht, wobei die Initialisierung derart vor sich geht, daß die mehrere Kondensatoren ($C_1$, $C_2$...$C_4$) innerhalb einer sehr kurzen Zeitspanne auf ein Potential ($V_M$) vorgeladen werden, das der gemessenen Temperatur entspricht, sowie Mittel, um die Abschaltung der elektrischen Anspeisung des Netzes (14) und der Initialisierungseinrichtung (15) nach dem Verschwinden des dissipativen Phänomens des zu schützenden Objektes zu verzögern, damit die Isttemperatur des Objektes wieder gleich der gemessenen Temperatur wird.

2. Meß- und Schutzeinrichtung nach Anspruch 1, bei welcher die Schalter Dioden ($D_n$) sind.

3. Meß- und Schutzeinrichtung nach Anspruch 2, bei welcher der positive Eingang des Operationsverstärkers (A) mit der dem Widerstand ($R_1$) zugeordneten Klemme des ersten der in Serie geschalteten Kreise des Netzes (14) unter Zwischenschaltung eines Schalters (I) verbunden ist, der die Dioden ($D_n$) am Ende der Initialisierung in Sperrichtung polt.

4. Meß- und Schutzeinrichtung nach Anspruch 1, bei welcher die Schalter gesteuerte Schalter sind.

5. Meß- und Schutzeinrichtung nach einem der Ansprüche 1 bis 4, bei welcher das zu schützende Objekt ein Mittel zur Umsteuerung (11) eines elektronischen Leistungsreglers ist, der in Abhängigkeit von einem externen Steuerbefehl (C) die Anspeisung einer Ladung ($R_L$) durch eine Quelle ($V_E$) regelt.

6. Meß- und Schutzeinrichtung nach Anspruch 5, bei welcher das Umsteuermittel (11) strombegrenzt ist und einen Feldeffekttransistor (10), einen Stromsensor (1) und einen Fehlerverstärker (Z) umfaßt, wobei ein Thermometer (21) im Abströmweg der vom Mittel zur Umsteuerung (11) dissipierten thermischen Energie angeordnet ist.

7. Meß- und Schutzeinrichtung nach Anspruch 8, bei welcher ein Meßglied (13) zur Messung des Momentanwertes der im Umsteuermittel (11) dissipierten Leistung an die Anschlußklemmen des Umsteuermittels (11) angeschlossen und mit dem Analognetz (14) mittels eines Schalters (12) verbunden ist, wobei das Thermometer (21) mit dem Netz (14) durch eine Konversionsschaltung (16) verbunden ist.

8. Meß- und Schutzeinrichtung nach einem der Ansprüche 5 bis 7, bei welchem das Analognetz (14) an einen Eingang eines Komparators (17) angeschlossen ist, der an seinem anderen Eingang eine Solltemperatur empfängt und der über seinen Ausgang mit einem Oder-Gatter (9) verbunden ist, an dem auch das externe Steuersignal (C) anliegt, wobei der Ausgang des Oder-Gatters (9) an einen Speicher (8) angeschlossen ist, der den Zustand des Umsteuermittels (11) steuert.

9. Meß- und Schutzschaltung nach Anspruch 8, bei welcher eine interne Quelle (8) den Speicher (8) und das Gatter (9) dauernd beaufschlagt, wobei alle anderen Elemente der Einrichtung von der Quelle (8) mittels eines vom Speicher (6) gesteuerten Schalters (20) vorsorgt werden.

10. Meß- und Schutzschaltung nach Anspruch 9, bei welcher die Steuerung des Schalters (20) durch den Speicher (6) mittels einer Verzögerungsschaltung (18) dann erfolgt, wenn der Speicher (6) die Öffnung des Umsteuermittels (11) veranlaßt.

11. Meß- und Schutzschaltung nach einem der Ansprüche 5 bis 10, bei welcher das Umsteuermittel mehrere strombegrenzte und parallel geschaltete Schalter (11, 11'...11$^n$) umfaßt.

12. Meß- und Schutzschaltung nach Anspruch 11, bei welcher die Wege der Abführ der von den Schaltern (11, 11'...11$^n$) dissipierten thermischen Energie ähnlich sind.

13. Meß- und Schutzschaltung nach Anspruch 11, bei welcher ein Thermometer (21) im Weg der Abfuhr der von jenem Schalter dissipierten thermischen Energie angeordnet ist, welcher den schlechtesten thermischen Widerstand besitzt.

**Claims**

1. Device for measuring the temperature of a dissipating object, or point, to be protected, comprising an analog network (14), representing a model of the thermal transmission between the object to be protected and the point where the temperature is measured and which comprises a series of resistor-capacitor (Rn+1, Cn) circuits connected in series, and provided with an electrical power source, and a thermometer, characterized by the fact it comprises a device (15) for initializing said network (14), which comprises an operational amplifier (A), the output of which is connected to said capacitors (Cn) of said circuits in series of said network (14) by means of a series of switches ($D_n$), and the two inputs of which are respectively connected to the terminals of the resistor ($R_1$) of the first circuit of the series of circuits in series of the network (14) the initializing device being arranged for, when applying, or applying again, the voltage of the power source, fixing said network (14) in the state of the operating point representing the real temperature of the object to be protected, initializing being achieved by preloading within a very short time the series of capacitors ($C_1$, $C_2$...$C_4$) to a potential ($V_M$) representing the measured temperature, and means for delaying cut off of the electrical supply to the network (14) and to the initializing device (15) after disappearance of the dissipative phenomenon of the object to be protected, in order for the real temperature of the object to become equal to the measured temperature.

2. Measuring and protecting device according to Claim 1, wherein said switches are diodes ($D_n$).

3. Measuring and protecting device according to Claim 2, wherein the positive input of said operational (A) is connected to the associated terminal of said resistor ($R_1$) of said first circuit of said series of circuits of said network (14) by means of a switch (I) arranged for biasing the diodes ($D_n$) in reverse at the end of the initialization.

4. Measuring and protecting device according to Claim 1, wherein said switches are controlled switches.

5. Measuring and protecting device according to one of Claims 1 to 4, wherein said object to be protected is a switching means (11) of an electronic power controller (22) arranged for controlling the supply of a load ($R_L$) by means of an electrical power source ($V_E$) as a function of an external control signal (C).

6. Measuring and protecting device according to Claim 5, wherein said switching means (11) is current-limited and comprises a field effect transistor (10), a current sensing means 1 and an error amplifier (2), a thermometer (21) being disposed within a path for evacuating the thermal energy dissipated by said switching means (11).

7. Measuring and protecting device according to Claim 6, wherein a means (13) for measuring the instantaneous power dissipated in said switching means (11) is connected across said switching means to said analog network (14) via a switch (12), said thermometer (2) being connected to said network (14) via a converting circuit (16).

8. Measuring and protecting device according to one of Claims 5 to 7, wherein said analog network (14) is connected to an input of a comparator (17) receiving on another input of instruction temperature and is connected by its output to an OR gate (9) receiving also said external control signal (C), the output of said gate (9) being connected to a memory (6) controlling the state of said switching means (11).

9. Measuring and protecting device according to Claim 8, wherein an internal source (8) supplies permanently said memory (6) and said gate (9), all other elements of the device being supplied by said internal source (8) via a switch (20) controlled by said memory (6).

10. Measuring and protecting device according to Claim 9, wherein control of the said switch (20) by said memory (6) is achieved by means of a timer (18) when said memory (6) controls the opening of said switching means (11).

11. Measuring and protecting device according to one of Claims 5 to 10, wherein said switching means comprises a series of switches (11, 11'...$11^n$) limited in current and connected in parallel.

12. Measuring and protecting device according to Claim 11, wherein the paths for evacuating the thermal energy dissipated by said switches (11, 11'...$11^n$) are similar.

13. Measuring and protecting device according to Claim 11, wherein a thermometer (21) is disposed within the path for evacuating the thermal energy dissipated by the switch of said series of switches having the worst thermal resistance.

Fig. 1

Fig. 2

Fig. 3

EP 0 209 404 B1

Fig.4

Fig.5

$V_C$

COMMUTATEUR
LIMITÉ EN
COURANT

*11*

*13*

*12*

$r$  $r$

$T_1$  $T_2$

$R$

$i = aV_C$

$(a \# 1/r + R)$

Fig. 6

$V_C$

COMMUTATEUR
LIMITÉ EN
COURANT

*11*

*13*

*12*

$R$  $T$

$(b \# 1/R)$

Fig. 7

$i = bV_C$

*1*

*10*

*2*  *3*

$I_M$

*11*

Fig. 8

4